# EUROPEAN PATENT SPECIFICATION

(11) **EP 3 043 052 B1**
(45) Date of publication and mention of the grant of the patent: **01.11.2017**
(21) Application number: 16150610.0
(22) Date of filing: 08.01.2016
(51) Int. Cl.: F02D 41/00, F02D 41/22

(54) **MALFUNCTION DIAGNOSIS DEVICE FOR CRANK-ANGLE SENSOR, AND MALFUNCTION DIAGNOSIS METHOD FOR CRANK-ANGLE SENSOR**
FEHLFUNKTIONSDIAGNOSEVORRICHTUNG FÜR KURBELWINKELSENSOR UND FEHLFUNKTIONSDIAGNOSEVERFAHREN FÜR KURBELWINKELSENSOR
DISPOSITIF DE DIAGNOSTIC DE DÉFAILLANCE POUR CAPTEUR D'ANGLE DE VILEBREQUIN ET PROCÉDÉ DE DIAGNOSTIC DE DÉFAILLANCE POUR CAPTEUR D'ANGLE DE VILEBREQUIN

(30) Priority: 09.01.2015 JP 2015003205
(43) Date of publication of application: 13.07.2016
(73) Proprietor: Toyota Jidosha Kabushiki Kaisha, Toyota-shi, Aichi 471-8571 (JP)
(72) Inventor: ENOMOTO, Hiroshi, Aichi-ken, Aichi 471-8571 (JP)
(74) Representative: D Young & Co LLP

(56) References cited:
- JP-A- 2009 236 003
- JP-A- 2011 002 383

## Description

### BACKGROUND

### 1. Technical Field

The disclosure relates to a malfunction diagnosis device for a crank-angle sensor, and relates also to a malfunction diagnosis method for a crank-angle sensor.

### 2. Description of Related Art

In the course of stopping an internal combustion engine mounted in a vehicle, such as an automobile, the pressure in a cylinder on its compression stroke increases and thus a force in such a direction that the forward rotation of a crankshaft is hindered acts on the crankshaft. This may cause a decrease in the engine speed. In the course of stopping the internal combustion engine, after the engine speed during the forward rotation of the crankshaft is fully decreased, the pressure in a cylinder on its compression stroke causes the crankshaft to start rotating in the reverse direction. This may cause an increase in the engine speed.

When the crankshaft is rotating in the reverse direction, a force in such a direction that the reverse rotation of the crankshaft is hindered acts on the crankshaft due to the pressure in a cylinder on its compression stroke. For this reason, while the crankshaft is rotating in the reverse direction, the engine speed increases as described above and then decreases. Furthermore, after the engine speed during the reverse rotation of the crankshaft is fully decreased, the crankshaft starts rotating in the forward direction due to the pressure in a cylinder on its compression stroke. After the rotational direction of the crankshaft is repeatedly reversed in the course of stopping the internal combustion engine, the internal combustion engine stops.

Some internal combustion engines are configured to be automatically stopped and restarted. With regard to such an internal combustion engine, it is required that a crank angle at the time of automatic stop of the internal combustion engine be detected, and the crank angle be used at the time of restart of the internal combustion engine to perform a prompt restart. To meet such a requirement, it is necessary to employ a crank-angle sensor capable of detecting a crank angle at the time when the internal combustion engine stops. As such a crank-angle sensor, there is a known crank-angle sensor that outputs, when a crankshaft of an internal combustion engine is rotating, a pulse signal in a mode that varies depending on the rotational direction. Using such a crank-angle sensor makes it possible to determine the rotational direction of the crankshaft based on the output mode of a pulse signal from the crank-angle sensor. Thus, it is possible to correctly detect the crank angle based on the determination on the rotational direction and the output of the pulse signal, without any influence from the reversal of the rotational direction of the crankshaft in the course of stopping the internal combustion engine.

Japanese Patent Application Publication No. 2011-002383 (JP 2011-002383 A) describes a malfunction diagnosis device that determines whether a crank-angle sensor is malfunctioning. In the malfunction diagnosis device, a region of engine speeds of an internal combustion engine, at which a crankshaft is assumed to rotate only in the forward direction (hereinafter, referred to as "prescribed engine speed region"), is set in advance. When the output mode of a pulse signal from a crank-angle sensor while the engine speed is within the prescribed engine speed region is a mode corresponding to the reverse rotation of the crankshaft, the malfunction diagnosis device determines that the crank-angle sensor is malfunctioning. In JP 2011-002383 A, a value (specifically, 400 rpm) lowed than the idling speed is indicated as an example of the lower limit of the prescribed engine speed region.

### SUMMARY OF THE INVENTION

An increase in the engine speed when a crankshaft is rotating in the reverse direction in the course of stopping an internal combustion engine is not always caused in a uniform manner but the manner of an increase in the engine speed varies depending on the situation in which the internal combustion engine is brought to a standstill. For this reason, depending on the manner of setting a prescribed engine speed region used in a malfunction diagnosis device to determine whether a crank-angle sensor is malfunctioning, there is a possibility that an engine speed when the crankshaft is rotating in the reverse direction in the course of stopping the internal combustion engine will increase and exceed the lower limit of the prescribed engine speed region. If the engine speed when the crankshaft is rotating in the reverse direction increases and exceeds the lower limit of the prescribed engine speed region, the engine speed enters the prescribed engine speed region, and the output mode of a pulse signal from the crank-angle sensor may a mode corresponding to the reverse rotation. As a result, an erroneous determination that the crank-angle sensor is malfunctioning may be made.

The invention provides a malfunction diagnosis device for a crank-angle sensor and a malfunction diagnosis method for a crank-angle sensor, the malfunction diagnosis device and the malfunction diagnosis method making it possible to reduce erroneous determinations that the crank-angle sensor is malfunctioning.

An aspect of the invention relates to a malfunction diagnosis device for a crank-angle sensor that outputs, when a crankshaft of an internal combustion engine is rotating, a pulse signal in a mode that varies depending on a rotational direction of the crankshaft. The malfunction diagnosis device includes an electronic control unit configured (i) to determine that the crank-angle sensor is malfunctioning upon satisfaction of a malfunction determination condition, and (ii) not to make a determination that the crank-angle sensor is malfunctioning when the malfunction determination condition is not satisfied. The malfunction determination condition includes a first condition and a second condition. The first condition is a condition that an engine speed at change timing, at which an output mode of the pulse signal from the crank-angle sensor changes from a first mode to a second mode, is higher than or equal to a determination value that is lower than an idling speed. The first mode is an output mode of the pulse signal corresponding to forward rotation of the crankshaft. The second mode is an output mode of the pulse signal corresponding to reverse rotation of the crankshaft. The second condition is a condition that the engine speed continues to be higher than or equal to the determination value from the change timing at which the output mode changes from the first mode to the second mode.

In the course of stopping the internal combustion engine, when the rotational direction of the crankshaft is reversed from the forward direction to the reverse direction, the engine speed is decreased to zero. For this reason, when the output mode of a pulse signal from the crank-angle sensor changes from a mode corresponding to the forward rotation of the crankshaft to a mode corresponding to the reverse rotation without a decrease of the engine speed to zero, there is a high probability that the crank-angle sensor is malfunctioning. To determine whether the engine speed is decreased to zero, it is determined whether the engine speed falls below the determination value that is lower than the idling speed. This is because when the engine speed falls below the determination value that is lower than the idling speed, the internal combustion engine cannot perform self-operation and it can be determined that the engine speed is decreased to zero.

In the malfunction diagnosis device, the crank-angle sensor is determined to be malfunctioning upon the satisfaction of the malfunction determination condition. For this reason, when the output mode of the pulse signal from the crank-angle sensor changes from the mode corresponding to the forward rotation of the crankshaft to the mode corresponding to the reverse rotation without a decrease in the engine speed to below the idling speed, the crank-angle sensor is determined to be malfunctioning.

On the other hand, when the output mode of the pulse signal from the crank-angle sensor changes from the mode corresponding to the forward rotation of the crankshaft to the mode corresponding to the reverse rotation in the state where the engine speed falls below the determination value that is lower than the idling speed, the malfunction determination condition is not satisfied, and thus the crank-angle sensor is not determined to be malfunctioning. It is therefore possible to avoid the situation where an erroneous determination that the crank-angle sensor is malfunctioning is made although the crank-angle sensor is operating normally, when the rotational direction of the crankshaft is reversed from the forward direction to the reverse direction and then the engine speed increases and exceeds the determination value during the reverse rotation of the crankshaft, in the course of stopping the internal combustion engine.

In the malfunction diagnosis device according to the above aspect, the electronic control unit may be configured to determine whether the engine speed is higher than or equal to the determination value at prescribed intervals, the electronic control unit may be configured to, when the engine speed at the change timing at which the output mode of the pulse signal from the crank-angle sensor changes from the first mode to the second mode is higher than or equal to the determination value, count the number of times that the engine speed is higher than or equal to the determination value after the change timing, and the electronic control unit may be configured to determine that the crank-angle sensor is malfunctioning based on the fact that the number of times that the engine speed is determined to be higher than or equal to the determination value is more than or equal to a prescribed value.

Another aspect of the invention relates to a malfunction diagnosis method for a crank-angle sensor that outputs, when a crankshaft of an internal combustion engine is rotating, a pulse signal in a mode that varies depending on a rotational direction of the crankshaft. The malfunction diagnosis method includes (i) determining that the crank-angle sensor is malfunctioning upon satisfaction of a malfunction determination condition, and (ii) not making a determination that the crank-angle sensor is malfunctioning when the malfunction determination condition is not satisfied. The malfunction determination condition includes a first condition and a second condition. The first condition is a condition that an engine speed at change timing, at which an output mode of the pulse signal from the crank-angle sensor changes from a first mode to a second mode, is higher than or equal to a determination value that is lower than an idling speed. The first mode is an output mode of the pulse signal corresponding to forward rotation of the crankshaft. The second mode is an output mode of the pulse signal corresponding to reverse rotation of the crankshaft. The second condition is a condition that the engine speed continues to be higher than or equal to the determination value from the change timing at which the output mode changes from the first mode to the second mode.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram schematically illustrating the entirety of an internal combustion engine provided with a malfunction diagnosis device for a crank-angle sensor;
FIG. 2 is a diagram schematically illustrating the internal structure of the crank-angle sensor provided in the vicinity of a crankshaft and the structure around the crank-angle sensor;
FIG. 3 is a time-series chart illustrating the output mode of a main signal from a main sensor, the output mode of a sub-signal from a sub-sensor, and the output mode of a pulse signal from the crank-angle sensor, when the crankshaft is rotating in the forward direction;
FIG. 4 is a time-series chart illustrating the output mode of a main signal from the main sensor, the output mode of a sub-signal from the sub-sensor, and the output mode of a pulse signal from the crank-angle sensor, when the crankshaft is rotating in the reverse direction;
FIG. 5 illustrates a time-series chart showing variations in the engine speed when the rotational direction of the crankshaft is reversed from the forward direction to the reverse direction, and a time-series chart showing variations in the width of a pulse signal from the crank-angle sensor when the rotational direction of the crankshaft is reversed from the forward direction to the reverse direction;
FIG. 6 illustrates a time-series chart showing variations in the engine speed when the crank-angle sensor is malfunctioning, and a time-series chart showing variations in the width of a pulse signal from the crank-angle sensor when the crank-angle sensor is malfunctioning;
FIG. 7 illustrates a time-series chart showing variations in the engine speed when the internal combustion engine stalls after the engine stall prevention control is executed, and a time-series chart showing variations in the width of a pulse signal from the crank-angle sensor when the internal combustion engine stalls after the engine stall prevention control is executed; and
FIG. 8 is a flowchart illustrating the procedure for determining whether the crank-angle sensor is malfunctioning.

### DETAILED DESCRIPTION OF EMBODIMENTS

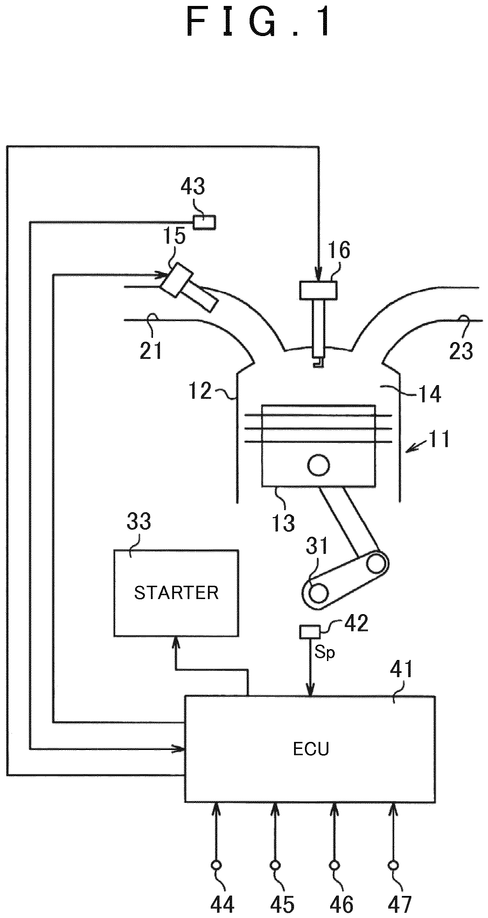

Hereinafter, a malfunction diagnosis device for a crank-angle sensor according to an embodiment of the invention will be described with reference to FIG. 1 to FIG. 8. In an internal combustion engine 11 illustrated in FIG. 1, fuel injected from a fuel injection valve 15, together with air, is taken into a combustion chamber 14 through an intake air passage 21. The combustion chamber 14 is defined by the inner face of a cylinder 12 and the top face of a piston 13. In the combustion chamber 14, an air-fuel mixture formed of the air and the fuel burns through ignition caused by an ignition plug 16. Combustion energy produced by the combustion of the air-fuel mixture causes the reciprocating motion of the piston 13, thereby rotating a crankshaft 31. After burning, the air-fuel mixture in the combustion chamber 14 is sent out, as exhaust gas, to an exhaust passage 23.

A starter 33 is connected to the crankshaft 31 of the internal combustion engine 11. The starter 33 forcibly causes the crankshaft 31 to rotate (performs cranking) in order to start up the internal combustion engine 11. To start up the internal combustion engine 11 from a standstill, fuel is injected from the fuel injection valve 15 while cranking is performed by the starter 33. In this way, the combustion chamber 14 is filled with an air-fuel mixture. In addition, the air-fuel mixture in the combustion chamber 14 is ignited by the ignition plug 16. As the air-fuel mixture in the combustion chamber 14 is burned (combusted) through the ignition by the ignition plug 16, the internal combustion engine 11 starts self-operation and the internal combustion engine 11 starts up.

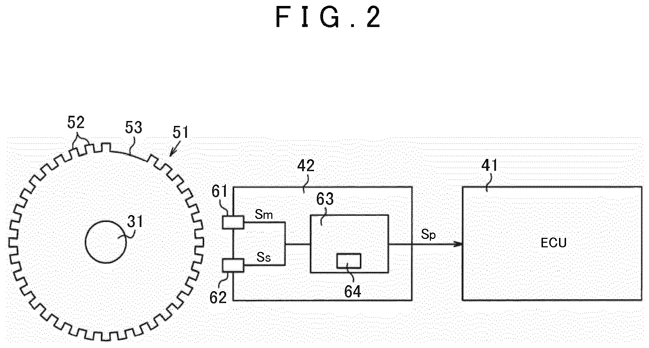

FIG. 2 illustrates the structure of a crank-angle sensor 42 and the structure around the crank-angle sensor 42. The crank-angle sensor 42 is provided in the vicinity of the crankshaft 31. A signal rotor 51 is provided at an end portion of the crankshaft 31 so as to be rotatable together with the crankshaft 31 in an integrated manner. The outer periphery of the signal rotor 51 is provided with a plurality of teeth 52 disposed at intervals of a prescribed angle (10°CA). Further, a toothless portion 53 having a shape obtained by removing two teeth is formed on a part of the outer periphery of the signal rotor 51 in order to sense a reference angle. The crank-angle sensor 42 is disposed at a position at which the crank-angle sensor 42 faces any one of the teeth 52 of the signal rotor 51. The crank-angle sensor 42 is used to detect a rotational position of the crankshaft 31 (crank angle CA) and a rotational speed of the crankshaft 31 (engine speed NE).

The crank-angle sensor 42 includes a main sensor 61, a sub-sensor 62, and a processor 63. The main sensor 61 faces any one of the teeth 52. The sub-sensor 62 is disposed at prescribed distance from the main sensor 61 in the circumferential direction of the signal rotor 51. The processor 63 outputs a pulse signal Sp based on a main signal Sm from the main sensor 61 and a sub-signal Ss from the sub-sensor 62. The processor 63 is provided with a timer 64 used to control the pulse width of the pulse signal Sp. Every time the crankshaft 31 rotates by a prescribed angle, the crank-angle sensor 42 outputs the pulse signal Sp with a pulse width that varies depending on the rotational direction of the crankshaft 31. In other words, the crank-angle sensor 42 outputs the pulse signal Sp in an output mode that varies depending on the rotational direction of the crankshaft 31.

Next, with reference to FIG. 1, the electrical configuration of the malfunction diagnosis device for the crank-angle sensor 42 will be described. The malfunction diagnosis device includes an electronic control unit 41 that executes various controls of the internal combustion engine 11. The electronic control unit 41 includes, for example, a central processing unit (CPU), a read-only memory (ROM), a random-access memory (RAM), an input port into which signals from the outside are input, and an output port from which signals are externally output. The CPU executes a computing process relating to the control of the internal combustion engine 11. In the ROM, programs and data required to control the internal combustion engine 11 are stored. In the RAM, results of computation executed by the CPU are temporarily stored.

Various sensors used to acquire the states of the internal combustion engine 11 and a vehicle are connected to the input port of the electronic control unit 41. The various sensors include, in addition to the crank-angle sensor 42, an ignition switch 44 operated by a driver, an accelerator position sensor 45, a brake sensor 46, and a vehicle speed sensor 47 used to detect a vehicle traveling speed. The accelerator position sensor 45 is a sensor used to detect the depression amount of an accelerator pedal (an accelerator pedal operation amount). The brake sensor 46 is a sensor used to detect the operation state of a brake pedal. In addition, driving circuits for devices such as the fuel injection valve 15, the ignition plug 16, and the starter 33 are connected to the output port of the electronic control unit 41.

The electronic control unit 41 acquires, based on the signals received from the various sensors, actual states of the internal combustion engine 11 and the vehicle and states of driving commands for the internal combustion engine 11 and the vehicle. Based on the actual states of the internal combustion engine 11 and the vehicle and the states of driving commands for the internal combustion engine 11 and the vehicle, the electronic control unit 41 outputs command signals to the driving circuits for the devices such as the fuel injection valve 15, the ignition plug 16, and the starter 33. Thus, the electronic control unit 41 executes various controls relating to the operation of the internal combustion engine 11, such as fuel injection control, stop-start control, and ignition timing control of the internal combustion engine 11.

The electronic control unit 41 stops and starts the internal combustion engine 11 in response to the operation of the ignition switch 44 manually performed by a driver. Usually, the internal combustion engine 11 is stopped through the manual operation performed by a driver while the internal combustion engine 11 is idling. The internal combustion engine 11 is stopped through the manual operation performed by a driver, by stopping fuel injection from the fuel injection valve 15 while the internal combustion engine 11 is idling. The electronic control unit 41 stops and starts the internal combustion engine 11 in response to the manual operation performed by a driver, and automatically stops and restarts the internal combustion engine 11 based on whether there is a possibility that the vehicle will travel while the internal combustion engine 11 is idling.

When the engine speed of the internal combustion engine 11 falls below the idling speed due to an erroneous operation performed by a driver, the electronic control unit 41 executes engine stall prevention control for retarding the ignition timing and increasing the intake air amount, to prevent the internal combustion engine 11 from stalling. In the engine stall prevention control, the amount of air-fuel mixture charged into the combustion chamber 14 is increased by increasing the amount of air taken into the internal combustion engine 11, and the ignition timing at which the air-fuel mixture is ignited is retarded. In this way, a decrease in the engine speed of the internal combustion engine 11 is suppressed.

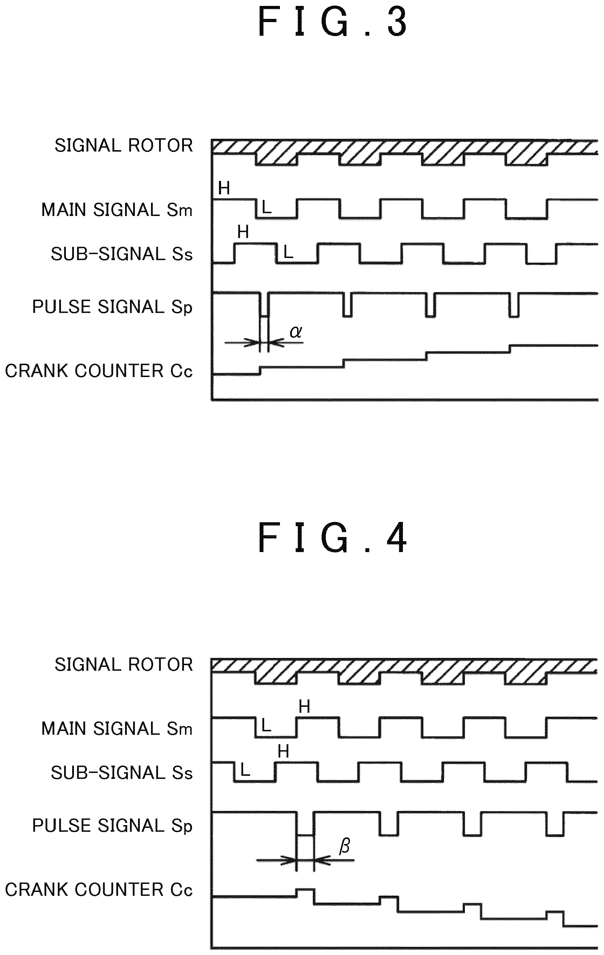

Next, description will be provided on a detection process executed by the electronic control unit 41 to detect the crank angle CA and the engine speed NE. FIG. 3 and FIG. 4 each illustrate the output mode of the main signal Sm from the main sensor 61, the output mode of the sub-signal Ss from the sub-sensor 62, and output mode of the pulse signal Sp from the crank-angle sensor 42 when the crankshaft 31 is rotating. The signal rotor 51 provided on the crankshaft 31 and the main sensor 61 and the sub-sensor 62 of the crank-angle sensor 42 are disposed such that the output modes of the main signal Sm and the sub-signal Ss coincide with the modes illustrated in FIG. 3 during the forward rotation of the crankshaft 31 and coincide with the modes illustrated in FIG. 4 during the reverse rotation of the crankshaft 31.

As illustrated in FIG. 3, while the crankshaft 31 is rotating in the forward direction, the voltage level of the main signal Sm from the main sensor 61 is a low level (L level) (e.g., 0 V) when the main sensor 61 faces any one of the teeth 52 of the signal rotor 51, whereas the voltage level of the main signal Sm from the main sensor 61 is a high level (H level) (e.g., 5 V) when the main sensor 61 does not face any of the teeth 52 of the signal rotor 51. Further, the voltage level of the sub-signal Ss from the sub-sensor 62 is a low level (L level) when the sub-sensor 62 faces any one of the teeth 52 of the signal rotor 51, whereas the voltage level of the sub-signal Ss from the sub-sensor 62 is a high level (H level) when the sub-sensor 62 does not face any of the teeth 52 of the signal rotor 51.

If the sub-signal Ss is at the high level when the main signal Sm is on its falling edge, the processor 63 of the crank-angle sensor 42 generates a pulse signal Sp having a prescribed width α indicating that the crankshaft 31 is rotating in the forward direction. The crank-angle sensor 42 then outputs the pulse signal Sp generated by the processor 63 to the electronic control unit 41. At this time, the output mode of the pulse signal Sp from the crank-angle sensor 42 is a mode corresponding to the forward rotation of the crankshaft 31.

As illustrated in FIG. 4, while the crankshaft 31 is rotating in the reverse direction, the voltage level of the main signal Sm from the main sensor 61 is a low level (L level) (e.g., 0 V) when the main sensor 61 faces any one of the teeth 52 of the signal rotor 51, whereas the voltage level of the main signal Sm from the main sensor 61 is a high level (H level) (e.g., 5 V) when the main sensor 61 does not face any of the teeth 52 of the signal rotor 51, as in the case where the crankshaft 31 is rotating in the forward direction. Further, the voltage level of the sub-signal Ss from the sub-sensor 62 is a low level (L level) when the sub-sensor 62 faces any one of the teeth 52 of the signal rotor 51, whereas the voltage level of the sub-signal Ss from the sub-sensor 62 is a high level (H level) when the sub-sensor 62 does not face any of the teeth 52 of the signal rotor 51, as in the case where the crankshaft 31 is rotating in the forward direction.

If the sub-signal Ss is at the high level when the main signal Sm is on its rising edge, the processor 63 of the crank-angle sensor 42 generates a pulse signal Sp having a prescribed width β indicating that the crankshaft 31 is rotating in the reverse direction. The prescribed width β is a width different from the prescribed width α described above, and is set greater than the prescribed width α in this example. The crank-angle sensor 42 then outputs the pulse signal Sp generated by the processor 63 to the electronic control unit 41. At this time, the output mode of the pulse signal Sp from the crank-angle sensor 42 is a mode corresponding to the reverse rotation of the crankshaft 31.

The electronic control unit 41 detects the rotational speed of the crankshaft 31 (the engine speed NE) based on the interval between one rising timing of the pulse signal Sp output from the crank-angle sensor 42 and the subsequent rising timing of the pulse signal Sp. The electronic control unit 41 determines the rotational direction of the crankshaft 31 based on the output mode of the pulse signal Sp from the crank-angle sensor 42. Based on the determination on the rotational direction and the output of the pulse signal Sp, the electronic control unit 41 increments or decrements a crank counter Cc, which is a calculated value corresponding to the crank angle CA, and detects the crank angle CA based on the crank counter Cc.

More specifically, upon detecting the falling edge of the pulse signal Sp, the electronic control unit 41 increments, by one, the crank counter Cc corresponding to the crank angle CA (Cc ← Cc + 1), as illustrated in FIG. 3. Furthermore, when the pulse width of the pulse signal Sp is the prescribed width α, the electronic control unit 41 determines that the crankshaft 31 is rotating in the forward direction and keeps the value of the crank counter Cc unchanged. On the other hand, when the pulse width of the pulse signal Sp is the prescribed width β (≠ the prescribed width α), the electronic control unit 41 determines that the crankshaft 31 is rotating in the reverse direction and decrements the crank counter Cc by two (Cc ← Cc - 2), as illustrated in FIG. 4. Incrementing or decrementing the crank counter Cc in such a manner enables the electronic control unit 41 to detect the crank angle CA based on the crank counter Cc, regardless of the rotational direction of the crankshaft 31.

In the course of stopping the internal combustion engine 11 that is running at idle, the pressure in the cylinder 12 (the combustion chamber 14) on its compression stroke increases, regardless of whether the internal combustion engine 11 is stopped through a manual operation or stopped automatically. This produces a force in such a direction that the forward rotation of the crankshaft 31 is hindered, thereby decreasing the engine speed NE. In the course of stopping the internal combustion engine 11, after the engine speed NE during the forward rotation of the crankshaft 31 is fully decreased, the pressure in the cylinder 12 on its compression stroke causes the crankshaft 31 to start rotating in the reverse direction and the engine speed NE increases.

When the crankshaft 31 is rotating in the reverse direction, a force in such a direction that the reverse rotation of the crankshaft 31 is hindered acts on the crankshaft 31 due to the pressure in the cylinder 12 on its compression stroke. For this reason, while the crankshaft 31 is rotating in the reverse direction, the engine speed NE increases and then decreases. Furthermore, after the engine speed NE during the reverse rotation of the crankshaft 31 is fully decreased, the crankshaft 31 starts rotating in the forward direction due to the pressure in the cylinder 12 on its compression stroke. After the rotational direction of the crankshaft 31 is repeatedly reversed in the course of stopping the internal combustion engine 11, the internal combustion engine 11 stops.

Even when the rotational direction of the crankshaft 31 is repeatedly reversed between the forward direction and the reverse direction in the course of stopping the internal combustion engine 11, the crank angle CA is correctly detected by using the crank-angle sensor 42. In addition, when the crank angle CA at the completion of stop of the internal combustion engine 11 is used at the time of fuel injection and ignition in the subsequent start-up, it is possible to promptly start up the internal combustion engine 11.

Next, malfunction diagnosis for the crank-angle sensor 42 will be described. When the timer 64 of the crank-angle sensor 42 is malfunctioning, the output mode of the pulse signal Sp from the crank-angle sensor 42 may be the mode corresponding to the reverse rotation of the crankshaft 31, despite the fact that the crankshaft 31 is rotating in the forward direction. When the output mode of the pulse signal Sp from the crank-angle sensor 42 is changed from the mode corresponding to the forward rotation of the crankshaft 31 to the mode corresponding to the reverse rotation of the crankshaft 31, that is, when the width of the pulse signal Sp is changed from the prescribed width α to the prescribed width β, the electronic control unit 41 determines whether the crank-angle sensor 42 is malfunctioning in the following manner, based on the engine speed NE at and after the change timing at which the output mode is changed.

That is, the electronic control unit 41 determines that crank-angle sensor 42 is malfunctioning, when a malfunction determination condition including the following conditions (A) and (B) is satisfied: (A) the engine speed NE at the change timing at which the output mode is changed is higher than or equal to a determination value H that is set to a value lower than the idling speed; and (B) a state where the engine speed NE is higher than or equal to the determination value H continues from the change timing. On the other hand, the electronic control unit 41 does not determine that the crank-angle sensor 42 is malfunctioning, when the malfunction determination condition is not satisfied, in other words, when the condition (A) (first condition) or the condition (B) (second condition) is not satisfied.

The engine speed NE at the change timing may be an engine speed NE that is detected based on the interval between the rising timing of the pulse signal Sp immediately before the width of the pulse signal Sp changes from the prescribed width α to the prescribed width β and the rising timing of pulse signal Sp immediately after the change in the width of the pulse signal Sp.

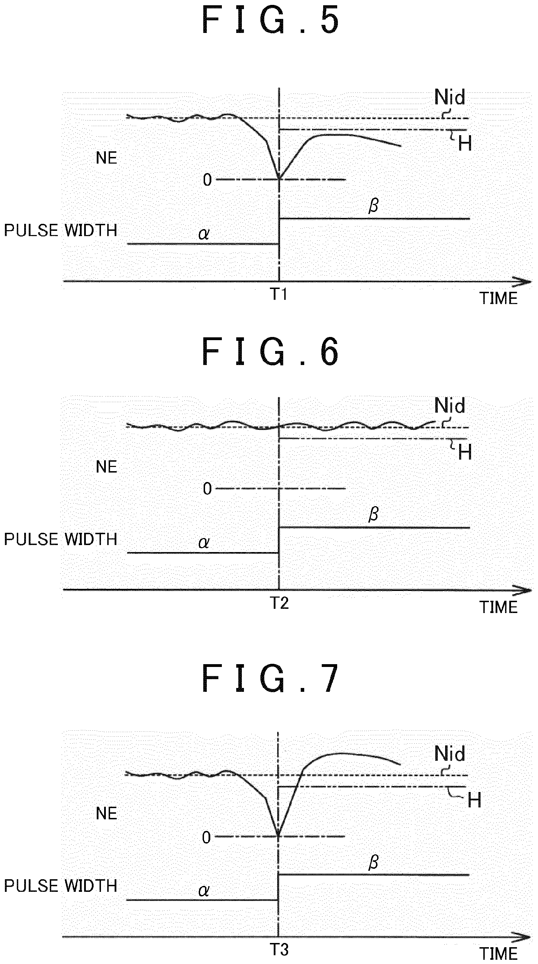

FIG. 5 illustrates a time-series chart showing variations in the engine speed NE when the rotational direction of the crankshaft 31 is reversed from the forward direction to the reverse direction in the course of normally stopping the internal combustion engine 11 that is running at idle, when the crank-angle sensor 42 is operating normally. FIG. 5 also illustrates a time-series chart showing variations in the width of the pulse signal Sp from the crank-angle sensor 42 when the rotational direction of the crankshaft31 is reversed from the forward direction to the reverse direction in the course of normally stopping the internal combustion engine 11 that is running at idle, when the crank-angle sensor 42 is operating normally.

When the fuel injection from the fuel injection valve 15 is stopped in order to stop the internal combustion engine 11 that is running at idle, the engine speed NE gradually decreases from an idling speed Nid as illustrated in FIG. 5. In such a course of stopping the internal combustion engine 11, a force in such a direction that the forward rotation of the crankshaft 31 is hindered acts on the crankshaft 31 due to an increase in the pressure in the cylinder 12 on its compression stroke. For this reason, after the engine speed NE during the forward rotation of the crankshaft 31 is fully decreased (timing T1), the pressure in the cylinder 12 on its compression stroke causes the crankshaft 31 to start rotating in the reverse direction and the engine speed NE increases with the reverse rotation. Meanwhile, when the rotational direction of the crankshaft 31 is reversed from the forward direction to the reverse direction, the width of the pulse signal Sp changes from the prescribed width α to the prescribed width β, as illustrated in FIG. 5.

When the internal combustion engine 11 is running at idle, the amount of air taken into the internal combustion engine 11 decreases. Thus, when the internal combustion engine 11 running at idle is stopped during the forward rotation of the crankshaft 31, the pressure in the cylinder 12 on its compression stroke increases to some extent but does not become too high. It is therefore considered that when the pressure in the cylinder 12 on its compression stroke causes the crankshaft 31 to rotate in the reverse direction after the engine stops running, the engine speed NE does not become higher than the idling speed Nid (indicated by a dashed line in FIG. 5).

In view of this, the determination value H is set, for example, as indicated by a long dashed double-short dashed line in the FIG. 5. More specifically, the determination value H is set such that the determination value H is higher than the highest value of the engine speed NE that increases after the rotational direction of the crankshaft 31 is reversed from the forward direction to the reverse direction in the course of normally stopping the internal combustion engine 11 that is running at idle, and the determination value H is the lowest possible value below the idling speed Nid. Setting the determination value H to the lowest possible value below the idling speed Nid increases the likelihood that it is determined that the crank-angle sensor 42 is malfunctioning.

FIG. 6 illustrates a time-series chart showing variations in the engine speed NE when the crank-angle sensor 42 is malfunctioning. FIG. 5 also illustrates a time-series chart showing variations in the width of the pulse signal Sp when the crank-angle sensor 42 is malfunctioning. When the internal combustion engine 11 is in the normal operating state, the engine speed NE does not fall below the determination value H (indicated by a long dashed double-short dashed line in the FIG. 6) that is set lower than the idling speed Nid (indicated by a dashed line in FIG. 6). In the normal operating state of the internal combustion engine 11, for example, in the state where the engine speed NE is adjusted to the idling speed Nid, when a malfunction occurs in the timer 64 of the crank-angle sensor 42, the width of the pulse signal Sp changes from the prescribed width α to the prescribed width β, as illustrated in FIG. 6 (timing T2).

In this case, when the width of the pulse signal Sp changes from the prescribed width α to the prescribed width β, the engine speed NE at the change timing of the width of the pulse signal Sp does not fall below the determination value H. After the change timing, the engine speed NE continues to be higher than or equal to the determination value H. As a result, it is determined that the crank-angle sensor 42 is malfunctioning, upon the satisfaction of the malfunction determination condition, that is, satisfaction of both the condition (A) and the condition (B). That is, it is determined that the crank-angle sensor 42 is malfunctioning, based on the facts that the engine speed NE at the change timing (timing T2), at which the width of the pulse signal Sp from the crank-angle sensor 42 changes from the prescribed width α to the prescribed width β, is higher than or equal to the determination value H and that the engine speed NE continues to be higher than or equal to the determination value H after the change timing.

An increase in the engine speed NE when the crankshaft 31 is rotating in the reverse direction in the course of stopping the internal combustion engine 11 is not always caused in a uniform manner but the manner of an increase in the engine speed NE varies depending on the situation in which the internal combustion engine 11 is brought to a standstill. For this reason, it is not always true that the engine speed NE during the reverse rotation of the crankshaft 31 does not exceed the idling speed Nid and there is a possibility that the engine speed NE when the crankshaft 31 is rotating in the reverse direction will exceed the idling speed Nid, depending on the situation in which the internal combustion engine 11 is brought to a standstill. Examples of the situation where the engine speed NE during the reverse rotation of the crankshaft 31 exceeds the idling speed Nid include a situation where the internal combustion engine 11 stalls despite the execution of the engine stall prevention control described above.

FIG. 7 illustrates a time-series chart showing variations in the engine speed NE when the internal combustion engine 11 stalls despite the execution of the engine stall prevention control. FIG. 7 also illustrates a time-series chart showing variations in the width of the pulse signal Sp when the internal combustion engine 11 stalls despite the execution of the engine stall prevention control.

In the stall prevention control, an increase in the amount of air taken into the internal combustion engine 11 increases the compression pressure in the cylinder 12 before the reverse rotation of the crankshaft 31 (during the forward rotation of the crankshaft 31), and retardation of the ignition timing maintains the fuel combustion in the cylinder 12 to the maximum extent. Therefore, when the reverse rotation of the crankshaft 31 occurs under the situation where the internal combustion engine 11 stalls despite the execution of the engine stall prevention control, the pressure in cylinder 12 increases and the engine speed NE during the reverse rotation of the crankshaft 31 significantly increases.

That is, when the engine speed NE during the forward rotation of the crankshaft 31 is fully decreased as illustrated in FIG. 7 (timing T3), the rotational direction of the crankshaft 31 is reversed from the forward direction to the reverse direction due to the pressure in the cylinder 12, and the engine speed NE during the reverse rotation increases and exceeds the idling speed Nid. When the rotational direction of the crankshaft 31 is reversed from the forward direction to the reverse direction, the width of the pulse signal Sp changes from the prescribed width α to the prescribed width β, as illustrated in FIG. 7, as long as the crank-angle sensor 42 is operating normally.

For this reason, as long as the crank-angle sensor 42 is operating normally under the above-described situation, when the width of the pulse signal Sp changes from the prescribed width α to the prescribed width β (timing T3), the engine speed NE at the change timing is a low value that is lower than the determination value H (indicated by a long dashed double-short dashed line in FIG. 7). As a result, the condition (A) for determining that the crank-angle sensor 42 is malfunctioning, that is, the condition that the engine speed NE at the change timing is higher than or equal to the determination value H, is not satisfied. In other words, the malfunction determination condition that both the condition (A) and the condition (B) are satisfied is not satisfied. Because the malfunction determination condition is not satisfied, a determination that the crank-angle sensor 42 is malfunctioning is not made.

It is therefore possible to avoid the situation where an erroneous determination that the crank-angle sensor 42 is malfunctioning is made although the crank-angle sensor 42 is operating normally, when the rotational direction of the crankshaft 31 is reversed from the forward direction to the reverse direction and then the engine speed NE increases and exceeds the determination value H during the reverse rotation of the crankshaft 31 in the course of stopping the internal combustion engine 11.

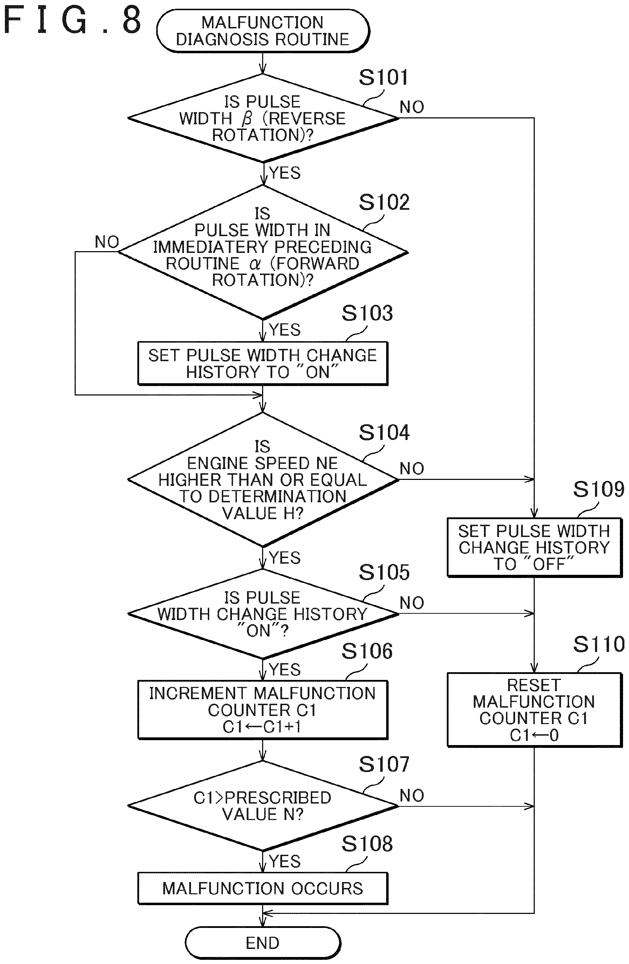

Next, the operation of the malfunction diagnosis device for the crank-angle sensor 42 will be described. FIG. 8 is a flowchart illustrating a malfunction diagnosis routine for determining whether the crank-angle sensor 42 is malfunctioning. The malfunction diagnosis routine is an interrupt routine periodically executed by the electronic control unit 41, for example, at intervals of a prescribed crank angle (10°CA, in this example).

The processes in steps 101 to 104 of the malfunction diagnosis routine illustrated in FIG. 8 (S101 to S104) are executed to determine whether the engine speed NE at the change timing, at which the output mode of the pulse signal Sp from the crank-angle sensor 42 changes to a mode corresponding to the reverse rotation of the crankshaft 31, is higher than or equal to the determination value H (whether the condition (A) is satisfied).

As the process in step 101 (S101) of the malfunction diagnosis routine, the electronic control unit 41 determines whether the width of the pulse signal Sp from the crank-angle sensor 42 is the prescribed width β, that is, whether the output mode of the pulse signal Sp is a mode corresponding to the reverse rotation of the crankshaft 31. When an affirmative determination is made in S101, the electronic control unit 41 proceeds to S102. As the process in S102, the electronic control unit 41 determines whether the width of the pulse signal Sp at the time of execution of the immediately preceding malfunction diagnosis routine is the prescribed width α, that is, whether the output mode of the pulse signal Sp at the time of execution of the immediately preceding malfunction diagnosis routine is a mode corresponding to the forward rotation of the crankshaft 31.

When an affirmative determination is made in S102, the electronic control unit 41 proceeds to S103. As the process in S103, the electronic control unit 41 sets a pulse width change history to "ON (changed)". The pulse width change history indicates that the width of the pulse signal Sp has changed from the prescribed width α to the prescribed width β. Then, the electronic control unit 41 proceeds to S104. On the other hand, when a negative determination is made in S102, the electronic control unit 41 skips S103 and proceeds to S104. As the process in S104, the electronic control unit 41 determines whether the engine speed NE is higher than or equal to the determination value H. When the electronic control unit 41 determines in S104 that the engine speed NE is higher than or equal to the determination value H, the electronic control unit 41 proceeds to S105.

The fact that the electronic control unit 41 proceeds to S105 means that the engine speed NE at the change timing, at which the output mode of the pulse signal Sp from the crank-angle sensor 42 changes to a mode corresponding to the reverse rotation of the crankshaft 31, is higher than or equal to the determination value H (the condition (A) is satisfied). The processes in S104 to S108 in the malfunction diagnosis routine are executed to determine whether the engine speed NE continues to be higher than or equal to the determination value H after the change timing (whether the condition (B) is satisfied).

In this series of processes, when the engine speed NE at the change timing is higher than or equal to the determination value H, the electronic control unit 41 counts the number of times that the engine speed NE is higher than or equal to the determination value H after the change timing (S105), through the determination process of determining whether the engine speed NE is higher than or equal to the determination value H at prescribed intervals (intervals of execution of the malfunction diagnosis routine) (S104). When the number of times is more than or equal to a prescribed value (S107: YES), the electronic control unit 41 determines that the crank-angle sensor 42 is malfunctioning (S108).

More specifically, when an affirmative determination is made in S104, the electronic control unit 41 determines whether the pulse width change history is set to "ON", as the process in S105. When an affirmative determination is made in S105, the electronic control unit 41 proceeds to S106. The electronic control unit 41 increments a malfunction counter C1 by one (C1 ← C1 + 1) in the process in S106, and determines in the subsequent process in S107 whether the value of the malfunction counter C1 is greater than a prescribed value N. The prescribed value N may be, for example, a natural number. When a negative determination is made in S107, the electronic control unit 41 ends the malfunction diagnosis routine. On the other hand, when an affirmative determination is made in S107, the electronic control unit 41 proceeds to S108.

The fact that electronic control unit 41 proceeds to S108 after an affirmative determination is made in S107 means that the engine speed NE at the change timing, at which the width of the pulse signal Sp changes from the prescribed width α to the prescribed width β, is higher than or equal to the determination value H, and the engine speed NE continues to be higher than or equal to the determination value H after the change timing. In other words, the fact that electronic control unit 41 proceeds to S108 after an affirmative determination is made in S107 means that the malfunction determination condition is satisfied, that is, both the condition (A) and the condition (B) are satisfied. Then, as the process in S108, the electronic control unit 41 determines that the crank-angle sensor 42 is malfunctioning, and then ends the malfunction diagnosis routine. When determining in S108 that the crank-angle sensor 42 is malfunctioning, the electronic control unit 41 notifies a driver of the occurrence of malfunction by issuing an audible alarm from a speaker or the like in a vehicle cabin or by lighting an alarm lamp, and executes the fail-safe control of the internal combustion engine 11 when the crank-angle sensor 42 is malfunctioning.

On the other hand, when the electronic control unit 41 determines in S101 of the malfunction diagnosis routine that the width of the pulse signal Sp is not the prescribed width β, that is, the width of the pulse signal Sp is the prescribed width α and the output mode of the pulse signal Sp is a mode corresponding to the forward rotation of the crankshaft 31, the electronic control unit 41 proceeds to S109. In addition, when the electronic control unit 41 determines in S104 that the engine speed NE is lower than the determination value H, the electronic control unit 41 proceeds to S109. As the process in S109, the electronic control unit 41 sets the pulse width change history to "OFF". Then, the electronic control unit 41 proceeds to S110. As the process in S110, the electronic control unit 41 resets the malfunction counter C1 to zero, and then ends the malfunction diagnosis routine.

When the engine speed NE at the change timing, at which the width of the pulse signal Sp from the crank-angle sensor 42 changes from the prescribed width α to the prescribed width β, is lower than the determination value H (when the condition (A) is not satisfied), a negative determination is made in S104 in the malfunction diagnosis routine. As a result, the above-described processes in S109 and S110 are executed, and a determination that the crank-angle sensor 42 is malfunctioning, which would be made through the execution of the processes in S105 to S108, is not made. As a result, it is possible to avoid the situation where an erroneous determination that the crank-angle sensor 42 is malfunctioning is made although the crank-angle sensor 42 is operating normally, when the engine speed NE increases and exceeds the determination value H during the reverse rotation of the crankshaft 31, for example, under a situation where the internal combustion engine 11 stalls after the engine stall prevention control is executed.

When an affirmative determination is made in the process in S104 and then a negative determination is made in the process in S104 in the routine executed thereafter (the condition (B) is not satisfied), the above-described processes in S109 and S110 are executed. Therefore, even when the engine speed NE at the change timing, at which the width of the pulse signal Sp from the crank-angle sensor 42 changes from the prescribed width α to the prescribed width β, is higher than or equal to the determination value H, if the engine speed NE falls below the determination value H after the change timing, a negative determination is made in S104. As a result, the above-described processes in S109 and S110 are executed, and a determination that the crank-angle sensor 42 is malfunctioning, which would be made through the execution of the processes in S105 to S108, is not made.

The present embodiment described above in detail produces the following advantageous effects. It is possible to avoid the situation where an erroneous determination that the crank-angle sensor 42 is malfunctioning is made although the crank-angle sensor 42 is operating normally, when the engine speed NE increases and exceeds the determination value H during the reverse rotation of the crankshaft 31 due to, for example, the situation where the internal combustion engine 11 stalls although the engine stall prevention control is executed to increase the amount of air taken into the internal combustion engine 11 and to retard the ignition timing.

In the malfunction diagnosis routine executed by the electronic control unit 41, it is determined that the crank-angle sensor 42 is malfunctioning, based on the fact that the value of the malfunction counter C1 in S107 becomes greater than the prescribed value N (the number of times that the engine speed NE is higher than or equal to the determination value H is more than or equal to the prescribed value). That is, it is determined that the crank-angle sensor 42 is malfunctioning, based on the facts that the engine speed NE at the change timing, at which the width of the pulse signal Sp from the crank-angle sensor 42 changes from the prescribed width α to the prescribed width β, is higher than or equal to the determination value H and that the engine speed NE continues to be higher than or equal to the determination value H after the change timing. In other words, it is determined that the crank-angle sensor 42 is malfunctioning, upon the satisfaction of the malfunction determination condition, that is, satisfaction of both the condition (A) and the condition (B). When the width of the pulse signal Sp changes from the prescribed width α to the prescribed width β due to a malfunction of the crank-angle sensor 42, the engine speed NE at the change timing does not fall below the determination value H, and the engine speed NE continues to be higher than or equal to the determination value H after the change timing. Therefore, determining that the crank-angle sensor 42 is malfunctioning upon the satisfaction of the malfunction determination condition enables the electronic control unit 41 to make a correct determination.

The foregoing embodiment may be modified as follows, for example. As the crank-angle sensor that outputs the pulse signal Sp in a mode that varies depending on the rotational direction of the crankshaft 31, there may be employed a crank-angle sensor that changes the voltage level of the pulse signal Sp based on the rotational direction of the crankshaft 31 instead of changing the width of the pulse signal Sp based on the rotational direction of the crankshaft 31.

It is determined that the condition (B) is satisfied when the number of times that the engine speed NE is determined to be higher than or equal to the determination value H is more than or equal to the prescribed value after the change timing at which the width of the pulse signal Sp from the crank-angle sensor 42 changes from the prescribed width α to the prescribed width β. However, whether the condition (B) is satisfied need not be determined in the above-described manner. For example, a time period over which the engine speed NE continues to be higher than or equal to the determination value H after the change timing, at which the width of the pulse signal Sp from the crank-angle sensor 42 changes from the prescribed width α to the prescribed width β, may be measured, and when the time period becomes longer than or equal to a prescribed time period, it may be determined that the condition (B) is satisfied.

## Claims

1. A malfunction diagnosis device for a crank-angle sensor (42) that outputs, when a crankshaft (31) of an internal combustion engine (11) is rotating, a pulse signal in a mode that varies depending on a rotational direction of the crankshaft (31), the malfunction diagnosis device **characterized by** comprising
an electronic control unit (41) configured:
to determine that the crank-angle sensor (42) is malfunctioning upon satisfaction of a malfunction determination condition, the malfunction determination condition including a first condition and a second condition, the first condition being a condition that an engine speed at change timing at which an output mode of the pulse signal from the crank-angle sensor (42) changes from a first mode to a second mode is higher than or equal to a determination value that is lower than an idling speed, the first mode being an output mode of the pulse signal corresponding to forward rotation of the crankshaft (31), the second mode being an output mode of the pulse signal corresponding to reverse rotation of the crankshaft (31), and the second condition being a condition that the engine speed continues to be higher than or equal to the determination value after the change timing at which the output mode changes from the first mode to the second mode.

2. The malfunction diagnosis device according to claim 1, wherein:
the electronic control unit is configured to determine whether the engine speed is higher than or equal to the determination value at prescribed intervals;
the electronic control unit is configured to, when the engine speed at the change timing at which the output mode of the pulse signal from the crank-angle sensor changes from the first mode to the second mode is higher than or equal to the determination value, count the number of times that the engine speed is higher than or equal to the determination value after the change timing; and
the electronic control unit is configured to determine that the crank-angle sensor is malfunctioning based on a fact that the number of times that the engine speed is determined to be higher than or equal to the determination value is more than or equal to a prescribed value.

3. A malfunction diagnosis method for a crank-angle sensor (42) that outputs, when a crankshaft (31) of an internal combustion engine (11) is rotating, a pulse signal in a mode that varies depending on a rotational direction of the crankshaft (31), the malfunction diagnosis method **characterized by** comprising:
determining that the crank-angle sensor (42) is malfunctioning upon satisfaction of a malfunction determination condition, the malfunction determination condition including a first condition and a second condition, the first condition being a condition that an engine speed at change timing at which an output mode of the pulse signal from the crank-angle sensor (42) changes from a first mode to a second mode is higher than or equal to a determination value that is lower than an idling speed, the first mode being an output mode of the pulse signal corresponding to forward rotation of the crankshaft (31), the second mode being an output mode of the pulse signal corresponding to reverse rotation of the crankshaft (31), and the second condition being a condition that the engine speed continues to be higher than or equal to the determination value from the change timing at which the output mode changes from the first mode to the second mode.

## Patentansprüche

1. Vorrichtung zur Diagnose einer Fehlfunktion für einen Kurbelwinkelsensor (42), welche, wenn sich eine Kurbelwelle (31) einer Brennkraftmaschine (11) dreht, in einem Modus, der in Abhängigkeit von einer Drehrichtung der Kurbelwelle (31) variiert, ein Impulssignal ausgibt, wobei die Vorrichtung zur Diagnose einer Fehlfunktion **dadurch gekennzeichnet ist, dass** sie
eine elektronische Steuereinheit (41) aufweist, die so konfiguriert ist, dass sie:
bei Erfüllung einer Fehlfunktionsbestimmungsbedingung bestimmt, dass eine Fehlfunktion des Kurbelwinkelsensors (42) vorliegt, wobei die Fehlfunktionsbestimmungsbedingung eine erste Bedingung und eine zweite Bedingung umfasst, wobei die erste Bedingung eine Bedingung ist, dass eine Maschinendrehzahl an einem Umstellzeitpunkt, an dem ein Ausgabemodus des Impulssignals von dem Kurbelwinkelsensor (42) von einem ersten Modus auf einen zweiten Modus umgestellt wird, höher ist als oder gleich ist wie ein Bestimmungswert, welcher niedriger ist als eine Leerlaufdrehzahl, und der erste Modus ein Ausgabemodus des Impulssignals entsprechend einer Vorwärtsdrehung der Kurbelwelle (31) ist, und wobei der zweite Modus ein Ausgabemodus des Impulssignals entsprechend einer Rückwärtsdrehung der Kurbelwelle (31) ist, und die zweite Bedingung eine Bedingung ist, dass die Maschinendrehzahl nach dem Umstellzeitpunkt, an dem der Ausgabemodus von dem ersten Modus auf den zweiten Modus umgestellt wird, weiterhin höher ist als oder gleich ist wie der Bestimmungswert.

2. Vorrichtung zur Diagnose einer Fehlfunktion nach Anspruch 1, wobei:
die elektronische Steuereinheit so konfiguriert ist, dass sie in vorgeschriebenen Intervallen bestimmt, ob die Maschinendrehzahl höher ist als oder gleich ist wie der Bestimmungswert;
die elektronische Steuereinheit so konfiguriert ist, dass sie, wenn die Maschinendrehzahl an dem Umstellzeitpunkt, an dem der Ausgabemodus des Impulssignals von dem Kurbelwinkelsensor von dem ersten Modus auf den zweiten Modus umgestellt wird, höher ist als oder gleich ist die der Bestimmungswert, die Häufigkeit zählt, mit welcher die Maschinendrehzahl nach dem Umstellzeitpunkt höher ist als oder gleich ist wie der Bestimmungswert; und
die elektronische Steuereinheit so konfiguriert ist, dass sie eine Fehlfunktion des Kurbelwinkelsensors basierend auf einer Tatsache bestimmt, dass die Häufigkeit, mit der bestimmt wird, dass die Maschinendrehzahl höher ist als oder gleich ist wie der Bestimmungswert, einen vorgeschriebenen Wert übersteigt oder diesem entspricht.

3. Verfahren zur Diagnose einer Fehlfunktion für einen Kurbelwinkelsensor (42), welches, wenn sich eine Kurbelwelle (31) einer Brennkraftmaschine (11) dreht, in einem Modus, der in Abhängigkeit von einer Drehrichtung der Kurbelwelle (31) variiert, ein Impulssignal ausgibt, wobei das Verfahren zur Diagnose einer Fehlfunktion **dadurch gekennzeichnet ist, dass** es aufweist:
das Bestimmen, dass eine Fehlfunktion des Kurbelwinkelsensors (42) vorliegt, bei Erfüllung einer Fehlfunktionsbestimmungsbedingung, wobei die Fehlfunktionsbestimmungsbedingung eine erste Bedingung und eine zweite Bedingung umfasst, wobei die erste Bedingung eine Bedingung ist, dass eine Maschinendrehzahl an einem Umstellzeitpunkt, an dem ein Ausgabemodus des Impulssignals von dem Kurbelwinkelsensor (42) von einem ersten Modus auf einen zweiten Modus umgestellt wird, höher ist als oder gleich ist wie ein Bestimmungswert, welcher niedriger ist als eine Leerlaufdrehzahl, und der erste Modus ein Ausgabemodus des Impulssignals entsprechend einer Vorwärtsdrehung der Kurbelwelle (31) ist, und wobei der zweite Modus ein Ausgabemodus des Impulssignals entsprechend einer Rückwärtsdrehung der Kurbelwelle (31) ist, und die zweite Bedingung eine Bedingung ist, dass die Maschinendrehzahl ab dem Umstellzeitpunkt, an dem der Ausgabemodus von dem ersten Modus auf den zweiten Modus umgestellt wird, weiterhin höher ist als oder gleich ist wie der Bestimmungswert.

## Revendications

1. Dispositif de diagnostic de défaillance pour un capteur d'angle de vilebrequin (42) qui produit, lorsqu'un vilebrequin (31) d'un moteur à combustion interne (11) tourne, un signal de pulsion dans un mode qui varie en fonction d'une direction de rotation du vilebrequin (31), le dispositif de diagnostic de défaillance étant **caractérisé en ce qu'**il comprend :
une unité de commande électronique (41) configurée :
pour déterminer que le capteur d'angle de vilebrequin (42) présente une défaillance suite à la satisfaction d'une condition de détermination de défaillance, la condition de détermination de défaillance comprenant une première condition et une seconde condition, la première condition étant une condition dans laquelle une vitesse du moteur au moment du changement auquel un mode de sortie du signal de pulsion du capteur d'angle de vilebrequin (42) passe d'un premier mode à un second mode, est supérieure ou égale à une valeur de détermination qui est inférieure à une vitesse de ralenti, le premier mode étant un mode de sortie du signal de pulsion correspondant à la rotation en avant du vilebrequin (31), le second mode étant un mode de sortie du signal de pulsion correspondant à la rotation en sens inverse du vilebrequin (31), et la seconde condition étant une condition dans laquelle la vitesse du moteur continue à être supérieure ou égale à la valeur de détermination après le moment de changement auquel le mode de sortie passe du premier mode au second mode.

2. Dispositif de diagnostic de défaillance selon la revendication 1, dans lequel :
l'unité de commande électronique est configurée pour déterminer si la vitesse du moteur est supérieure ou égale à la valeur de détermination à des intervalles déterminés ;
l'unité de commande électronique est configurée pour, lorsque la vitesse du moteur au moment du changement auquel le mode de sortie du signal de pulsion du capteur d'angle de vilebrequin passe du premier mode au second mode, est supérieure ou égale à la valeur de détermination, compter le nombre de fois que la vitesse du moteur est supérieure ou égale à la valeur de détermination après le moment de changement ; et
l'unité de commande électronique est configurée pour déterminer que le capteur d'angle de vilebrequin présente une défaillance en fonction du fait que le nombre de fois que la vitesse du moteur est déterminée comme étant supérieure ou égale à la valeur de détermination, est supérieur ou égal à la valeur déterminée.

3. Procédé de diagnostic de défaillance pour un capteur d'angle de vilebrequin (42) qui produit, lorsqu'un vilebrequin (31) d'un moteur à combustion interne (11) tourne, un signal de pulsion dans un mode qui varie en fonction d'une direction de rotation du vilebrequin (31), le procédé de diagnostic de défaillance étant **caractérisé en ce qu'**il comprend l'étape suivante :
déterminer que le capteur d'angle de vilebrequin (42) présente une défaillance suite à la satisfaction d'une condition de détermination de défaillance, la condition de détermination de défaillance comprenant une première condition et une seconde condition, la première condition étant une condition dans laquelle une vitesse du moteur au moment du changement auquel un mode de sortie du signal de pulsion du capteur d'angle de vilebrequin (42) passe d'un premier mode à un second mode, est supérieure ou égale à une valeur de détermination qui est inférieure à une vitesse de ralenti, le premier mode étant un mode de sortie du signal de pulsion correspondant à la rotation en avant du vilebrequin (31), le second mode étant un mode de sortie du signal de pulsion correspondant à la rotation en sens inverse du vilebrequin (31), et la seconde condition étant une condition dans laquelle la vitesse du moteur continue à être supérieure ou égale à la valeur de détermination par rapport au moment de changement auquel le mode de sortie passe du premier mode au second mode.
